# EUROPÄISCHE PATENTSCHRIFT

(11) **EP 1 495 222 B1**
(45) Veröffentlichungstag und Bekanntmachung des Hinweises auf die Patenterteilung: **25.05.2011**
(21) Anmeldenummer: 03724854.9
(22) Anmeldetag: 26.03.2003
(51) Int. Cl.: F02D 41/40, F02D 41/22

(54) **VERFAHREN ZUM BERWACHEN EINER BRENNKRAFTMASCHINE**
METHOD FOR MONITORING AN INTERNAL COMBUSTION ENGINE
PROCEDE DE SURVEILLANCE D'UN MOTEUR A COMBUSTION INTERNE

(30) Priorität: 08.04.2002 DE 10215407; 08.01.2003 DE 10300194
(43) Veröffentlichungstag der Anmeldung: 12.01.2005
(73) Patentinhaber: ROBERT BOSCH GMBH, 70442 Stuttgart (DE)
(72) Erfinder: PITZAL, Volker, 73550 Waldstetten/Wissgoldingen (DE); EDLER VON SCHWERTFUEHRER, Gerit, 71642 Ludwigsburg (DE)
(86) Internationale Anmeldenummer: PCT/DE2003/000986
(87) Internationale Veröffentlichungsnummer: WO 2003/085249

(56) Entgegenhaltungen:
- EP-A- 0 921 296
- EP-A- 0 921 296
- EP-A- 1 103 711
- WO-A-00/73642
- WO-A-02/12698
- DE-A- 10 123 035
- DE-A- 10 218 552
- DE-A- 19 900 740
- PATENT ABSTRACTS OF JAPAN vol. 2000, no. 24, 11. Mai 2001 (2001-05-11) & JP 2001 193537 A (TOYOTA MOTOR CORP), 17. Juli 2001 (2001-07-17)

## Beschreibung

Die Erfindung betrifft ein Verfahren zum Überwachen einer Brennkraftmaschine, bei der Kraftstoff in wenigstens zwei Teilmengen mittels wenigstens eines Stellelements direkt in wenigstens einen Brennraum eingespritzt wird.

Die Erfindung betrifft weiterhin eine entsprechende Verwendung des Verfahrens bei der Überwachung einer Brennkraftmaschine sowie eine entsprechende Vorrichtung.

Moderne Brennkraftmaschinen sind mit einer Motorsteuerung ausgestattet, die in Abhängigkeit von Eingangsgrößen die Leistung und das Drehmoment der Brennkraftmaschine durch Steuerung von entsprechenden Parametern einstellt. Zur Vermeidung von Störungen, insbesondere von Störungen im elektronischen Steuergerät der Motorsteuerung, sind vielfältige Überwachungsmaßnahmen vorzusehen, die einen sicheren Betrieb der Brennkraftmaschine sowie die Verfügbarkeit der Brennkraftmaschine sicherstellen.

### Stand der Technik

Aus der WO 02/12698 ist ein Verfahren und eine Vorrichtung zur Überwachung einer Brennkraftmaschine bekannt, bei der Kraftstoff in wenigstens zwei Teileinspritzungen mittels eines Stellelementes in wenigstens einen Brennraum eingespritzt wird. Ausgehend von der eingespritzten Kraftstoffmenge wird ein Istdrehmoment der Brennkraftmaschine bestimmt, dass mit einem zulässigen Drehmoment der Brennkraftmaschine verglichen wird. Weichen diese beiden Größen voneinander ab, wird auf Fehler erkannt. Für jede Teileinspritzung wird das erzeugte Teildrehmoment ermittelt. Anschließend werden die Teildrehmomente der einzelnen Teileinspritzungen zu einem Gesamtdrehmoment auf summiert.

Die DE 199 00 740 A1 offenbart ein Verfahren und eine Vorrichtung zur Betreiben einer Brennkraftmaschine, welche in bestimmten Betriebszuständen mit einem mageren Luft/Kraftstoff Gemisch betrieben wird. Dabei wird die einzuspritzende Kraftstoffmasse bzw. die auszugebende Einspritzzeit abhängig von einem Sollwert bestimmt. Zur Überwachung der Funktionsfähigkeit wird auf der Basis der einzuspritzenden Kraftstoffmasse bzw. der auszugebenden Einspritzzeit oder der ausgegebenen Einspritzzeit das Istdrehmoment der Brennkraftmaschine bestimmt, mit einem maximal zulässigen Moment verglichen und eine Fehlerreaktion eingeleitet, wenn das Istdrehmoment das maximal zulässige überschreitet. Die Bestimmung der einzuspritzenden Kraftstoffmasse erfolgt entsprechend der DE 199 00 740 A1 an Hand der vom Steuergerät ausgegebenen Einspritzzeit und eventueller weiterer Größen wie zum Beispiel dem Kraftstoffdruck. Die ermittelte Kraftstoffmasse wird in ein abgegebenes Motormoment umgerechnet, das unter Berücksichtigung von Wirkungsgraden, beispielsweise dem Wirkungsgrad des Einspritzzeitpunktes, korrigiert wird. Parallel dazu wird eine die Sauerstoffkonzentration im Abgas repräsentierende Größe mit wenigstens einem vorgegebenen Grenzwert verglichen und eine Fehlerreaktion eingeleitet, wenn diese den Grenzwert überschreitet.

Aus der nicht vorveröffentlichten DE 101 23 035.4 ist eine Brennkraftmaschine bekannt, bei der die Kraftstoffzumessung in wenigstens eine erste Teileinspritzung und eine zweite Teileinspritzung aufteilbar ist. Bei der zweiten Teileinspritzung wird eine Kraftstoffmengengröße, die die bei der zweiten Teileinspritzung eingespritzten Kraftstoffmenge charakterisiert, abhängig von wenigstens einer Druckgröße, die den Kraftstoffdruck charakterisiert, der Kraftstoffmengengröße und wenigstens einer weiteren Größe korrigiert.

### Aufgabe

Es ist Aufgabe der Erfindung, eine Überwachung des Drehmomentes einer Brennkraftmaschine anzugeben, bei der die Kraftstoffzumessung in wenigstens eine erste Teileinspritzung und eine zweite Teileinspritzung aufgeteilt wird.

### Lösung und Vorteile der Erfindung

Die Aufgabe wird gelöst durch ein Verfahren zum Überwachen einer Brennkraftmaschine, bei der Kraftstoff in wenigstens zwei Teileinspritzungen mittels wenigstens eines Stellelements direkt in wenigstens einen Brennraum eingespritzt wird, bei dem wenigstens auf Grundlage einer eingespritzten und/oder einer einzuspritzenden Kraftstoffmasse ein Istdrehmoment der Brennkraftmaschine bestimmt wird, wobei dieses Istdrehmoment mit einem zulässigen Drehmoment der Brennkraftmaschine verglichen wird, wobei eine Fehlerreaktion eingeleitet wird, wenn das Istdrehmoment in einem vorgegebenen Verhältnis zum zulässigen Drehmoment steht. Dabei wird für jede Teileinspritzung das momentenwirksame Kraftstoffvolumen bestimmt und anschließend aufsummiert. Ausgehend von diesem Gesamtkraftstoffvolumen wird die Kraftstoffmasse und das Istdrehmoment der Brennkraftmaschine bestimmt. Die Kraftstoffmasse wird mit einer Wellenkorrekturmasse zu einer korrigierten Kraftstoffmasse verknüpft.

Diese Wellenkorrektur kann beispielsweise durch eine Subtraktion der Wellenkorrekturmasse von der zuvor bestimmten Kraftstoffmasse erfolgen.

Durch diese erfindungsgemäße Maßnahme wird in besonders vorteilhafter Weise eine Drehmomentüberwachung zur Verfügung gestellt, die mehrere Teileinspritzungen berücksichtigt und in jeder Betriebssituation durchgeführt werden kann. Durch die Wellenkorrektur werden in besonders vorteilhafter Weise Wellenerscheinungen berücksichtigt, die bei einem Hochdruckeinspritzsystem, wie zum Beispiel einem Common-Rail-System, in der Zuleitung vom Kraftstoffspeicherraum zum Injektor auftreten können und somit die während einer Ansteuerdauer des Injektors eingespritzte Kraftstoffmasse beeinflussen Vorteilhafterweise wird die Wellenkorrekturmasse wenigstens auf Basis von Kraftstoffvolumen der Teileinspritzungen und des auf den Kraftstoff einwirkenden Druckes bestimmt.

Vorteilhafterweise wird ein Kraftstoffvolumen einer Teileinspritzung wenigstens auf Basis einer Ansteuerdauer des betreffenden Stellelements und eines auf den Kraftstoff einwirkenden Druckes bestimmt wird. Alternativ kann anstelle oder zusätzlich zu dem Druck eine Größe berücksichtigt werden, die den Ansteuerbeginn charakterisiert. Dies kann zum Beispiel durch ein im Steuergerät der Brennkraftmaschine abgelegtes und speziell an die jeweilige Teileinspritzung appliziertes Kennfeld erfolgen. Ist das Stellelement als Injektor ausgebildet, so wird aus den Eingangsgrößen Ansteuerdauer des betreffenden Injektors und auf den Kraftstoff einwirkender Druck (bei einer Common-Rail-Brennkraftmaschine der Raildruck im Common-Rail) aus dem Kennfeld der entsprechende Kraftstoffvolumenwert entnommen. Ist das Stellelement als so genannte Pumpe-Düse-Einheit oder als Pumpe-Leitungs-Düse ausgebildet, so wird an Stelle des Drucks der Ansteuerbeginn verwendet.

Eine Vorteilhafte Weiterbildung der Erfindung sieht vor, dass das bestimmte Kraftstoffvolumen einer Teileinspritzung in Abhängigkeit von einem Ansteuerbeginn des entsprechenden Injektors korrigiert wird. Diese Korrektur erfolgt vorteilhafterweise, durch einen Korrekturfaktor, der aus einem vom Ansteuerbeginn abhängigen Einspritzeffizienzkennfeld entnommen wird. Diese Weiterbildung hat den großen Vorteil, dass der möglicherweise nicht lineare Zusammenhang zwischen Ansteuerbeginn des Injektors und erzielter Momentenwirkung berücksichtigt wird. Dies ist vor dem Hintergrund von modernen Brennkraftmaschinen mit einem Abgasnachbehandlungssystem sinnvoll, da in diesen Fällen ein veränderter Ansteuerbeginn nicht notwendigerweise einen Einfluss auf das von der Brennkraftmaschine erzeugte Drehmoment hat sondern gegebenenfalls nur zu einer Erhöhung der Abgastemperatur beiträgt.

Aus der auf diese Weise korrigierten Kraftstoffmasse wird mittels einer Drehzahl der Brennkraftmaschine ein Drehmoment der Brennkraftmaschine bestimmt. Dies erfolgt vorteilhafterweise mittels eines Kennfelds, das im Steuergerät der Brennkraftmaschine abgelegt ist. Hierbei können gegebenenfalls auch weitere Einflussparameter außer der Drehzahl der Brennkraftmaschine berücksichtigt werden. Das bestimmte Drehmoment der Brennkraftmaschine wird erfindungsgemäß mit einem Wirkungsgradkorrekturfaktor zu einem korrigierten Drehmoment der Brennkraftmaschine verknüpft. Durch diesen Wirkungsgradkorrekturfaktor werden besonders vorteilhaft Einflussgrößen wie zum Beispiel Temperatur der Brennkraftmaschine, Reibung der Brennkraftmaschine, Öltemperatur und Ölqualität berücksichtigt.

Vorteilhaft wird dann die Fehlerreaktion eingeleitet wird, wenn das Istdrehmoment größer als das zulässige Drehmoment ist.

Vorteilhaft ist weiterhin die Verwendung des erfindungsgemäßen Überwachungsverfahrens zur Überwachung einer direkteinspritzenden Dieselbrennkraftmaschine, insbesondere mit einem Common-Rail-System und/oder einer Pumpe-Düse-Einheit und/oder einer Pumpe-Leitungs-Düse.

Weitere vorteilhafte Ausgestaltungen ergeben sich aus der nachfolgenden Beschreibung von Ausführungsbeispielen.

### Beschreibung von Ausführungsbeispielen

Fig. 1 zeigt ein erstes Ausführungsbeispiel des erfindungsgemäßen Verfahrens,
Fig. 2 zeigt ein Detail des ersten Ausführungsbeispiels,
Fig. 3 zeigt eine mögliche Erweiterung des ersten Ausführungsbeispiels und
Fig4 zeigt eine zweites Ausführungsbeispiel des erfindungsgemäßen Verfahrens.

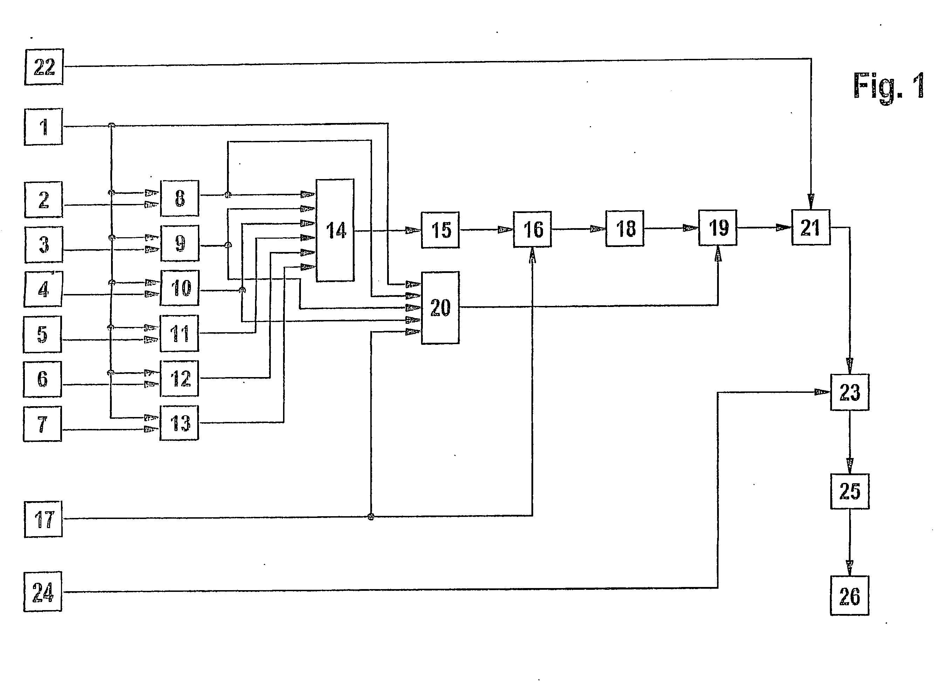

Fig. 1 zeigt ein erstes Ausführungsbeispiel des erfindungsgemäßen Verfahrens zum Überwachen einer Brennkraftmaschine. Das Ziel des in Fig. 1 beschriebenen Verfahrens ist die Bestimmung eines Motoristmomentes, das mit einem zulässigen Moment verglichen wird. Bei dem Verfahren von Fig. 1, das in der Regel in einem Motorsteuergerät der Brennkraftmaschine abläuft, werden gewisse Eingangsgrößen als im Motorsteuergerät vorliegend vorausgesetzt. Diese Eingangsgrößen sind in der Fig. 1 mit den Bezugszeichen 1 bis 7, 17, 22 und 24 gekennzeichnet.

Das Ausführungsbeispiel nach Fig. 1 wird an Hand von verschiedenen Einspritzarten beschrieben, wie sie üblicherweise bei einer direkteinspritzenden Dieselbrennkraftmaschine Anwendung finden. Das erfindungsgemäße Verfahren ist jedoch nicht auf eine Dieselbrennkraftmaschine beschränkt, sondern kann prinzipiell bei jeder direkteinspritzenden Brennkraftmaschine mit mehreren verschiedenen Einspritzarten angewendet werden.

Die direkteinspritzende Dieselbrennkraftmaschine zu deren Überwachung das Verfahren nach Fig. 1 dient, ist eine sogenannte Common-Rail-Dieselbrennkraftmaschine, bei der der Kraftstoff in einem gemeinsamen Kraftstoffverteiler, dem sogenannten Common-Rail, für Einspritzungen zur Verfügung steht. Ausgehend vom Common-Rail, in dem der Kraftstoff unter Hochdruck steht, gelangt der Kraftstoff über, in der Regel kurze, Hochdruckleitungen zu den Injektoren, die den Kraftstoff direkt in die Brennräume der Brennkraftmaschine einspritzen. Durch den im Common-Rail unter Druck zur Verfügung stehenden Kraftstoff ist es möglich verschiedene Arten von Kraftstoffeinspritzungen in ein und demselben Brennraum auszuführen. Diese verschiedenen Arten von Einspritzungen können Voreinspritzungen, Haupteinspritzungen oder Nacheinspritzungen sein.

Bei dem Verfahren nach Fig. 1 ist mit dem Bezugszeichen 1 der aktuelle Raildruck p gekennzeichnet. Mit dem Bezugszeichen 2 ist die Ansteuerdauer eines Injektors für eine Haupteinspritzung ti_Main gekennzeichnet. Diese Haupteinspritzung liefert den wesentlichen Drehmomentenbeitrag der Brennkraftmaschine. Mit dem Bezugszeichen 3 ist die Ansteuerdauer des Injektors für eine erste Piloteinspritzung ti_Pilot1 gekennzeichnet. Diese erste Piloteinspritzung kann beispielsweise 10 bis 20 Grad Kurbelwellenwinkel vor der Haupteinspritzung abgesetzt werden und erzielt neben einem Drehmomentenbeitrag vor allem den Effekt, dass die Brennkraftmaschine leiser läuft. Mit dem Bezugszeichen 4 ist die Ansteuerdauer einer zweiten Voreinspritzung ti_Pilot2 bezeichnet. Diese zweite Piloteinspritzung kann beispielsweise ebenfalls der Geräuschverringerung der Brennkraftmaschine dienen, kann aber auch im Zusammenhang mit der ersten Piloteinspritzung zu besseren Abgaswerten führen. Mit dem Bezugszeichen 5 ist eine dritte Voreinspritzung ti_Pilot3 bezeichnet, die beispielsweise weit vor allen anderen Einspritzungen in den Brennraum abgesetzt werden kann und so zum Beispiel zu einem nennenswerten Drehmomentesanstieg beiträgt. Mit dem Bezugszeichen 6 ist die Ansteuerdauer des Injektor für eine erste Nacheinspritzung ti_Post1 bezeichnet und mit dem Bezugszeichen 7 die Ansteuerdauer einer zweiten Nacheinspritzung ti_Post2. Die beiden Nacheinspritzungen dienen insbesondere der Verbesserung von Abgaswerten sowie möglicherweise dem Reinigen eines NOx-Speicherkatalysators oder eines Partikelfilters.

Der Raildruck p nach Bezugszeichen 1 sowie die Ansteuerdauer der Haupteinspritzung ti_Main nach Bezugszeichen 2 werden einem Kennfeld Main (Bezugszeichen 8) zugeführt. In Abhängigkeit der zugeführten Ansteuerdauer und des Raildruckes p ergibt sich als Ausgangswert des Kennfeldes Main (Bezugszeichen 8) ein durch die Haupteinspritzung hervorgerufenes Kraftstoffvolumen, das einem Summierer 14 zugeführt wird. Den Kennfeldern Pilot1 (Bezugszeichen 9), Pilot2 (Bezugszeichen 10), Pilot3 (Bezugszeichen 11), Post1 (Bezugszeichen 12) und Post2 (Bezugszeichen 13) werden ebenfalls jeweils der aktuelle Raildruck p nach Bezugszeichen 1 sowie die entsprechende Ansteuerdauern nach den Bezugszeichen 3 (ti_Pilot1), 4 (ti_Pilot2), 5 (ti_Pilot3), 6 (ti_Post1) und 7 (ti_Post2) zugeführt. Als Ergebnis ergibt sich analog zum Kennfeld 8 jeweils ein entsprechendes Kraftstoffvolumen, das ebenfalls dem Summierer 14 zugeführt wird. Als Ergebnis des Summierers 14 ergibt sich am Punkt 15 das gesamte Kraftstoffvolumen, das in einem Verbrennungszyklus über den Injektor mittels verschiedener Einspritzarten in den Brennraum eingebracht wurde.

Diese Kraftstoffvolumen wird einem Verknüpfungspunkt 16 zugeführt, dem weiterhin das Signal der Kraftstoffdichte rho aus dem Signalblock 17 zugeführt wird. Die Verknüpfung, bzw. die Multiplikation, des Kraftstoffvolumens mit der Kraftstoffdichte rho 17 führt auf die Kraftstoffmasse 18.

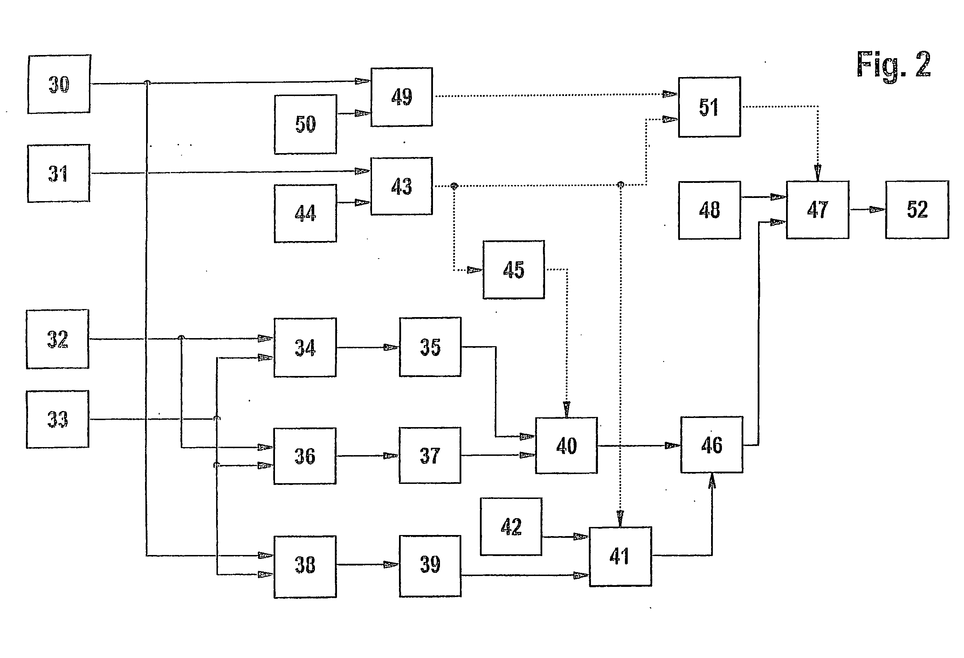

Die Kraftstoffmasse 18 wird einem Subtrahierer 19 zugeführt, der als weiteres Eingangssignal das Ausgangssignal eines Signalblocks 20 aufweist. Innerhalb des Signalblocks 20 wird eine sogenannte Wellenkorrekturkraftstoffmasse bestimmt, die dazu dient stehende Wellen in der Hochdruckleitung zwischen dem Common-Rail und dem jeweiligen Injektor zu kompensieren, die entstehen wenn verschiedene Einspritzarten in geringem zeitlichem Abstand aufeinander ausgeführt werden. Durch den geringen zeitlichen Abstand aufeinanderfolgender Einspritzungen kann es passieren, dass der Kraftstoff in der Hochdruckleitung noch nicht wieder vollständig zur Ruhe gekommen ist, wenn die nächstfolgende Einspritzung ausgeführt wird. Das hierbei auftretende physikalische Phänomen in der Hochdruckleitung ist eine stehende Welle. Als Eingangsgrößen werden der Wellenkorrektur nach Block 20 der aktuelle Raildruck p aus Block 1, die Kraftstoffdichte rho aus Block 17, sowie die Ausgangssignale der Kennfelder 8, 9 und 10 zugeführt, womit die Kraftstoffvolumen der Haupt- sowie der ersten und zweiten Nacheinspritzung dem Wellenkorrekturblock 20 zugeführt werden. Wie im Einzelnen die Wellenkorrekturkraftstoffmasse innerhalb des Blockes 20 bestimmt wird, wird im Rahmen der nachfolgenden Fig. 2 erläutert.

Das Ausgangssignal des Wellenkorrekturblocks 20 wird wie bereits gesagt an den Subtrahierer 19 übermittelt. Innerhalb des Subtrahierers wird die Wellenkorrekturkraftstoffmasse von der zuvor bestimmten Kraftstoffmasse 18 subtrahiert. Die sich ergebende korrigierte Kraftstoffmasse wird einem Momentenkennfeld 21 zugeführt. Dem Momentenkennfeld 21 wird weiterhin die Drehzahl n der Brennkraftmaschine aus einem Block 22 zugeführt. Als Ausgangsgröße der zugeführten korrigierten Kraftstoffmasse und der Drehzahl n der Brennkraftmaschine ergibt sich ein Drehmoment der Brennkraftmaschine.

Dieses bestimmte Drehmoment der Brennkraftmaschine wird einem Verknüpfungspunkt 23 zugeführt. Dem Verknüpfungspunkt 23 wird weiterhin das Signal des Blockes 24 zugeführt. Das Signal nach Block 24 ist ein sogenannter Wirkungsgradfaktor der im Motorsteuergerät vorliegt. Dieser Wirkungsgradfaktor berücksichtigt u. a. die Temperatur der Brennkraftmaschine, die Reibung der Brennkraftmaschine, die Öltemperatur, die Ölqualität und gegebenenfalls weitere Einflussgrößen. Der Wirkungsgradfaktor 24 wird im Verknüpfungspunkt 23 mit dem zuvor bestimmten Drehmoment der Brennkraftmaschine multipliziert. Das Ergebnis der Verknüpfung 23 ist das berechnete innere Istdrehmoment der Brennkraftmaschine.

Diese Istdrehmoment 25 wird einer Vergleichsroutine 26 zugeführt, in der das zuvor bestimmte innere Istdrehmoment mit einem zulässigen inneren Drehmoment der Brennkraftmaschine verglichen wird. Wird dabei festgestellt, dass das innere Istdrehmoment größer als das zulässige Drehmoment der Brennkraftmaschine ist, wird eine entsprechende Fehlerreaktion eingeleitet. Eine solche Fehlerreaktion kann beispielsweise eine Sicherheitskraftstoffabschaltung oder eine Drehzahlbeschränkung der Brennkraftmaschine sein. Die Beschränkung der Drehzahl hat gegenüber einer möglichen Momentenbegrenzung den Vorteil, dass die Drehzahl einfacher überwacht werden kann. Weitere Reaktionen können ein Eintrag in einen Fehlerspeicher, eine Fehleranzeige zur Information des Fahrers des Kraftfahrzeugs oder ein Neustart des Steuergerät der Brennkraftmaschine sein.

Die Bestimmung eines zulässigen Momentes ist dem Fachmann bekannt und kann beispielsweise nach dem Beobachterprinzip mittels eines redundanten Momentenpfades innerhalb des Motorsteuergerätes bestimmt werden. Eine der Einflussgrößen auf das zulässige Moment ist zum Beispiel die Fahrpedalbetätigung.

Fig. 2 zeigt in detaillierter Darstellung den bereits im Rahmen der Beschreibung von Fig. 1 gezeigten Wellenkorrekturblock 20. Wie bereits im Rahmen der Beschreibung zu Fig. 1 erläutert, werden dem Wellenkorrekturblock als Eingangsgrößen das Kraftstoffvolumen der ersten Voreinspritzung Pilot1 (Bezugszeichen 30), das Kraftstoffvolumen der zweiten Voreinspritzung Pilot2 (Bezugszeichen 31), der aktuelle Raildruck p (Bezugszeichen 32), das Kraftstoffvolumen der Haupteinspritzung Main (Bezugszeichen 33) und die Dichte rho des verwendeten Kraftstoffs (Bezugszeichen 17) zugeführt. Aus den zugeführten Kraftstoffvolumina (30, 31 und 33) sowie der zugeführten Kraftstoffdichte rho (17) wird im Wellenkorrekturblock zunächst innerhalb der Signalblöcke 30, 31 und 33 die jeweilige Kraftstoffmasse bestimmt, die dann als jeweiliges Ausgangssignal der Blöcke 30, 31 und 33 zur Verfügung steht. Diese jeweiligen Verknüpfungen mit der Kraftstoffdichte rho sind in Fig. 2 nicht gezeigt, da es die alternative Möglichkeit gibt, dem Wellenkorrekturblock unmittelbar die bestimmten Kraftstoffmassen zuzuführen. Dazu müsste in der Darstellung nach Fig. 1 nach der Bestimmung der einzelnen Kraftstoffvolumen zunächst die Umrechnung auf einzelne Kraftstoffmassen erfolgen, bevor die einzelnen Kraftstoffmassen in einem Summierer (wie Block 14 in Fig. 1) zu einer Gesamtkraftstoffmasse zusammengeführt werden. In diesem Fall würden also die einzelnen Kraftstoffmassen unmittelbar als Signal vorliegen. Welche Variante letztendlich verwendet wird liegt in der Auswahl des Fachmanns, der verschiedenen Einflussgrößen, wie zum Beispiel Laufzeitwerte des Steuergeräts berücksichtigen wird.

Einem ersten Mengenkorrekturkennfeld 34 werden als Eingangsgrößen der aktuelle Raildruck 32 und die Kraftstoffmasse der Hautpeinspritzung 33 zugeführt. Das Ergebnis des Mengenkorrekturkennfelds 34 ist eine erste Korrekturmenge 35. Einem zweiten Mengenkorrekturkennfeld 36 werden als Eingangsgrößen die gleichen Eingangsgrößen wie dem ersten Mengenkorrekturkennfeld 34 zugeleitet. Das Ergebnis des zweiten Mengenkorrekturkennfelds 36 ist eine zweite Korrekturmenge 37. Einem dritten Mengenkorrekturkennfeld 3 8 werden als Eingangsgrößen die Kraftstoffmasse der Haupteinspritzung 33 sowie die Kraftstoffmasse der ersten Voreinspritzung 30 zugeführt. Das Ergebnis des dritten Mengenkorrekturkennfelds 38 ist eine dritte Korrekturmenge 39. Die erste Korrekturmenge 35 und die zweite Korrekturmenge 37 werden einem ersten Auswahlblock 40 zugeführt. Die dritte Korrekturmenge 39 wird einem zweiten Auswahlblock 41 zugeführt. Der zweite Auswahlblock 41 weist als weiteres Eingangssignal ein Vorgabewert 42 auf, der in diesem Ausführungsbeispiel zu Null gesetzt wird. Mit anderen Worten: Der Ausgangswert des ersten Auswahlblocks 1 ist entweder die erste Korrekturmenge 35 oder die zweite Korrekturmenge 37 und der Ausgangswert des zweiten Auswahlblocks 41 ist entweder die dritte Korrekturmenge 39 oder der Vorgabewert 42 (= 0).

Die Kraftstoffmasse der zweiten Voreinspritzung 31 wird einem ersten Eingang einer ersten Abfragelogik 43 zugeführt, die dann einen "High Level" als Ausgangswert liefert, wenn der erste Eingangswert der Abfragelogik 43 größer als der zweite Eingangswert ist. Der ersten Abfragelogik 43 wird als zweiter Eingabewert ein zweiter Vorgabewert 44 zugeführt, der in diesem Ausführungsbeispiel zu Null gesetzt wird. Die erste Abfragelogik 43 funktioniert derart, dass das Ergebnis der Abfragelogik 43 einen "High Level" aufweist, sofern der Kraftstoffmassenwert 31 vorliegt. Falls der Wert der Kraftstoffmasse 31 nicht vorliegt, ist der Ausgangswert der Abfragelogik 43 "Low Level".

Die Kraftstoffmasse der ersten Voreinspritzung 30 wird einem ersten Eingang einer zweiten Abfragelogik 49 zugeführt, die dann einen "High Level" als Ausgangswert liefert, wenn der erste Eingangswert der Abfragelogik 49 größer als der zweite Eingangswert ist. Der zweiten Abfragelogik 49 wird als zweiter Eingabewert ein vierter Vorgabewert 50 zugeführt, der in diesem Ausführungsbeispiel zu Null gesetzt wird. Die zweite Abfragelogik 49 funktioniert derart, dass das Ergebnis der Abfragelogik 49 einen "High Level" aufweist, sofern der Kraftstoffmassenwert 30 vorliegt. Falls der Wert der Kraftstoffmasse 30 nicht vorliegt, ist der Ausgangswert der Abfragelogik 49 "Low Level".

Das Ausgangssignal der ersten Abfragelogik 43 wird einem Negierer 45 zugeführt. Der Ausgangswert des Negierers 45 wird einem Schalteingang des ersten Auswahlgliedes 40 zugeführt. Die Grundstellung des ersten Auswahlgliedes 40 (bei einem "Low Level" Signal am Schalteingang) liefert als Ausgangswert des ersten Auswahlglieds 40 das Signal der ersten Korrekturmenge nach Block 35. Liegt hingegen ein "High Level" am Schalteingang vor, so wird als Ausgangsgröße des ersten Auswahlblocks 40 die zweite Korrekturmenge 37 ausgegeben. Der Ausgangswert des ersten Auswahlblocks 40 wird einem Summierer 46 zugeführt.

Das Ausgangssignal der zweiten Abfragelogik 49 wird einem Schalteingang des zweiten Auswahlgliedes 41 zugeführt. Die Grundstellung des zweiten Auswahlgliedes 41 (bei einem "Low Level" Signal am Schalteingang) liefert als Ausgangswert des zweiten Auswahlglieds 41 das Signal des ersten Vorgabewertes nach Block 42 (also gleich Null). Liegt hingegen ein "High Level" am Schalteingang vor, so wird als Ausgangsgröße des zweiten Auswahlblocks 41 die dritte Korrekturmenge 39 ausgegeben. Der Ausgangswert des zweiten Auswahlblocks 41 wird ebenfalls dem Summierer 46 zugeführt.

Die Ausgangssignale der Abfragelogiken 43 und 49 werden zusätzlich einem Oder-Glied 51 zugeführt, das als Ausgangssignal einen "High Level" aufweist, sofern ein Ausgangssignal der Abfragelogiken 43 und 49 ebenfalls ein "High Signal" aufweist. Liegen am Eingang des Oder-Gliedes 51 nur "Low Signale" an, liefert auch der Ausgang des Oder-Gliedes 51 nur ein "Low Signal".

Das Ausgangssignal des Summierers 46 wird einem dritten Auswahlblock 47 zugeführt, dem als weiterer Eingangswert ein dritter Vorgabewert 48 zugeführt wird, der in diesem Ausführungsbeispiel zu Null gesetzt wird. Dem Schalteingang des dritten Auswahlblocks 47 wird das Ausgangssignal des Oder-Gliedes 51 zugeführt. Die Grundstellung des dritten Auswahlgliedes 47 (bei einem "Low Level" Signal am Schalteingang) liefert als Ausgangswert des dritten Auswahlglieds 47 das Signal des dritten Vorgabewertes nach Block 48 (also gleich Null). Liegt hingegen ein "High Level" am Schalteingang vor, so wird als Ausgangsgröße des dritten Auswahlblocks 47 der Ausgangswert des Summierers 46 ausgegeben.

Das Ausgangssignal des dritten Auswahlblocks 47 wird einem Ausgangssignalblock 52 zugeführt und stellt die gesuchte Wellenkorrekturmenge dar, die in der Ausführung nach Fig. 1 Verwendung findet.

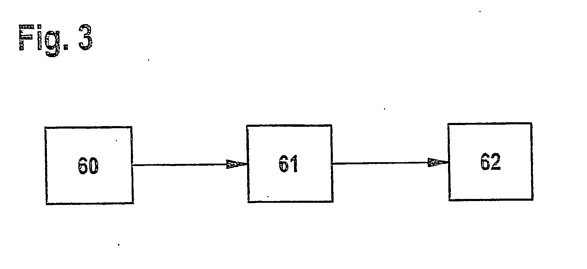

Fig. 3 zeigt eine mögliche Erweiterung des ersten Ausführungsbeispiels nach Fig. 1. Bei modernen Dieselbrennkraftmaschinen, die ein Abgasnachbehandlungssystem aufweisen, kann es vorkommen, dass die Ansteuerdauer und insbesondere der Ansteuerbeginn momentenneutral verändert werden. Dies kann prinzipiell bei allen zuvor beschriebenen Einspritzarten vorkommen. In diesen Fällen machen der Ansteuerbeginn und die Ansteuerdauer der Kraftstoffeinspritzung keine eindeutige Aussage über das erzeugte Drehmoment. Beispielsweise kann zur Regenerierung eines Abgasnachbehandlungssystems der Ansteuerbeginn der Haupteinspritzung von einigen Grad vor dem oberen Totpunkt nach einigen Grad nach dem oberen Totpunkt verschoben werden. Diese Verschiebung des Ansteuerbeginns wird momentenneutral durchgeführt und hat lediglich eine höhere Verbrennungstemperatur zur Folge, die der Regenerierung des Abgasnachbehandlungssystems dient. In diesen Fällen ist es also nötig, die Wirksamkeit des Ansteuerbeginns und der Ansteuerdauer zu berücksichtigen. Hierzu dient das im Ausführungsbeispiel nach Fig. 3 beschriebene Verfahren. Hierbei wird der Ansteuerbeginn 60 einem Effektivitätskennfeld 61 zugeführt. Dieses Effektivitätskennfeld 61 muss individuell für jede verschiedene Einspritzart innerhalb des Motorsteuergeräts abgelegt sein. Der Ausgabewert des Effektivitätskennfelds ist ein Korrekturfaktor 62, mit dem die bestimmten Kraftstoffvolumen als Ausgangswerte der Blöcke 8, 9, 10, 12 und 13 nach Fig. 1 korrigiert werden können. Beispielsweise könnte die Haupteinspritzung um den Faktor 2 verlängert werden während wie bereits vorhergehend beschrieben, der Ansteuerbeginn von einigen Grad vor OT nach einigen Grad nach OT verschoben wird. Diese Veränderung der Haupteinspritzung wäre momentenneutral, so dass als Korrekturfaktor der Wert 0,5 verwendet werden müsste, da das doppelte Kraftstoffvolumen nur zum gleichen Drehmoment führt. Zusätzlich kann ein weiteres Effektivitätskennfeld für die Einspritzdauer oder auch ein kombiniertes Effektivitätskennfeld für Einspritzbeginn und Einspritzdauer verwendet werden.

Eine zusätzliche Erweiterung des erfindungsgemäßen Verfahrens sieht vor, dass eine Plausibilisierung der entsprechend des Ausführungsbeispiels nach Fig. 1 bestimmten Kraftstoffmasse erfolgt. Dies kann zum Beispiel durch die Verknüpfung eines Lambdasensorwertes mit dem Signal eines Heißfilmluftmassenmessers und einer Motordrehzahl unter Berücksichtigung der Abgasrückführrate erfolgen. Auf diese Weise lässt sich ein zweiter, unabhängiger Kraftstoffmassenwert bestimmen. Hierdurch kann ein in angemessenen Toleranzen genaue Aussage über die tatsächlich eingespritzte Kraftstoffmasse getroffen werden, so dass eine aus unabhängigen Größen gewonnene mittlere eingespritzte Kraftstoffmasse zur Plausibilisierung der aus den Ansteuerdaten gewonnen Kraftstoffmasse zur Verfügung steht.

Zusammenfassend steht durch das erfindungsgemäße Überwachungsverfahren eine Möglichkeit zur kontinuierlichen Momentenüberwachung im gesamten Drehzahlbereich der Brennkraftmaschine zur Verfügung. Hierdurch wird die Sicherheit des Gesamtsystems erhöht und eine bessere Fehlerreaktion gewährleistet.

Im Rahmen dieser Anmeldung wurde der Momentenvergleich an Hand von inneren Momenten der Brennkraftmaschine beschrieben. Gleichwohl kann die Erfindung für jedes mögliche Motormoment verwendet werden, sofern die Vergleichbarkeit der Momente gegeben ist.

Vorteilhaft erfolgt die Bestimmung der Eingangsdaten nach Fig. 1 drehzahlsynchron. Diese Bestimmung wird im (in den Figuren nicht gezeigten) Steuergerät der Brennkraftmaschine durchgeführt und ist nicht Gegenstand dieser Anmeldung.

Eine erfindungsgemäße Vorrichtung besteht aus einer Brennkraftmaschine mit einem Steuergerät, das in der Lage ist, das erfindungsgemäße Verfahren auszuführen.

Neben sogenannten Common-Rail-Systemen, bei denen der Druckaufbau von der Steuerung beginnt und am Ende der Kraftstoffzumessung getrennt sind, sind auch Systeme bekannt, bei denen der Druckaufbau und die Steuerung der Kraftstoffzumessung eng miteinander verbunden sind. Auch bei solchen Systemen ist eine erfindungsgemäße Überwachung der Steuereinrichtung erforderlich. Dies ist insbesondere bei sogenannten Pumpe-Düse-Systemen und/oder Pumpe-Leitungs-Düse-Systemen der Fall. Generell kann die beschriebene Vorgehensweise bei allen Kraftstoffzumesssystemen verwendet werden, bei denen der Beginn und/oder das Ende der Kraftstoffzumessung mittels eines Stellelements beeinflusst werden. Der Beginn der Ansteuerung dieses Stellelements legt in der Regel den Beginn der Kraftstoffzumessung, und das Ende der Ansteuerung legt das Ende der Kraftstoffzumessung fest. Den Abstand zwischen Beginn und Ende der Ansteuerung wiederum bestimmt die einzuspritzende Kraftstoffmenge.

In der Regel wird bei Pumpe-Düse-Systemen lediglich eine Haupteinspritzung, eine Voreinspritzung und eine Nacheinspritzung durchgeführt. Prinzipiell sind auch weitere Einspritzungen möglich. Im Folgenden wird die Vorgehensweise am Beispiel der ersten Piloteinspritzung und der zweiten Nacheinspritzung beschrieben. Erfindungsgemäß kann die Vorgehensweise auch auf die anderen Einspritzungen und/oder auf mehr oder weniger Teileinspritzungen übertragen werden.

Bei der im Vorgehenden beschriebenen Vorgehensweise, bei einem sogenannten Common-Rail-System, sind die wesentlichen Einflussgrößen die einzuspritzende Kraftstoffmenge, die Ansteuerdauer und der Raildruck. Diese Größen werden über entsprechende Kennfelder berücksichtigt. Zusätzlich können auch weitere Größen wie beispielsweise die Drehzahl, die Kraftstoffdichte und/oder Temperatureinflüsse berücksichtigt werden. Im Gegensatz hierzu wurde erfindungsgemäß erkannt, dass die wesentlichen Einflussgrößen auf die Kraftstoffmenge bei einem sogenannten Pumpe-Düse-System bzw. einem Pumpe-Leitungs-Düse-System oder allgemein bei einem System, bei dem die Druckerzeugung nicht von der Kraftstoffzumessung entkoppelt ist, die Ansteuerdauer und der Ansteuerbeginn sind. Neben diesen Größen können zusätzlich noch die Drehzahl, die Temperatur und/oder die Dichte des Kraftstoffes berücksichtigt werden. Anstelle des Ansteuerbeginns können auch andere Größen, die den Ansteuerbeginn charakterisieren verwendet werden. Insbesondere kann ein Förderbeginnsignal verwendet werden.

Ausgehend von diesen Größen erfolgt die Vorgabe einer Kraftstoffmasse QKV, die auch als virtuelle Kraftstoffmasse bezeichnet wird. Ausgehend von dieser virtuellen Kraftstoffmasse QKV wird dann entsprechend, wie in Figur 1 dargestellt, von dem Momentenkennfeld 21 das Ist-Drehmoment bestimmt und ausgehend von diesem die Plausibilitätsabfrage durchgeführt.

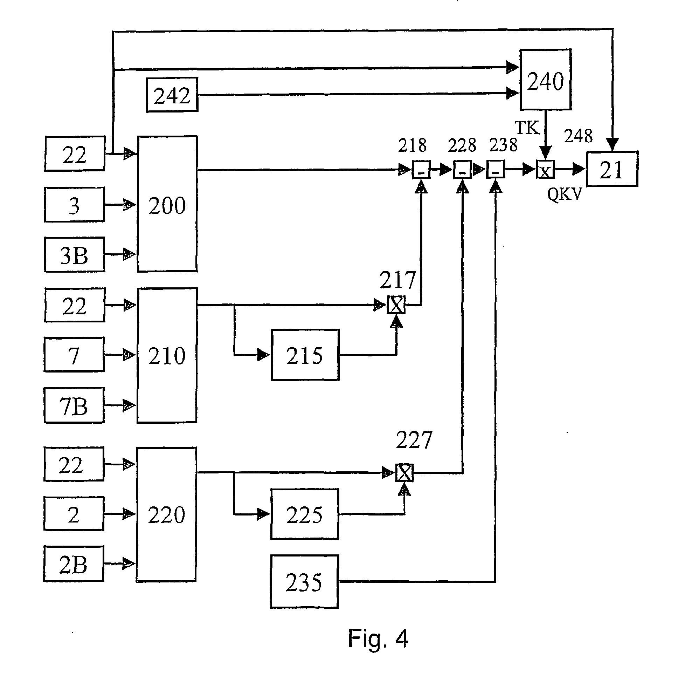

Die Vorgehensweise ist in Figur 4 detaillierter dargestellt. Bereits in den früheren Figuren beschriebene Elemente sind mit entsprechenden Bezugszeichen bezeichnet. Neben der Drehzahl 22, der Ansteuerdauer für die Haupteinspritzung ti-Main für die erste Piloteinspritzung ti_Pilot1 und die zweite Nacheinspritzung ti_Post2 sind jeweils zusätzlich noch die entsprechenden Ansteuerbeginne erforderlich.

Der Ansteuerbeginn FB_Main für die Haupteinspritzung ist mit 3B bezeichnet. Diese Größe wird neben der Drehzahl N und der Ansteuerdauer ti_Main der Haupteinspritzung einer ersten Massenberechnung 200 zugeleitet.

Der Ansteuerbeginn FB_Piolot1 der ersten Piloteinspritzung ist mit 7B bezeichnet. Der Ansteuerbeginn FB_Pilot1, die Ansteuerdauer ti_Pilot1 der ersten Piloteinspritzung und die Drehzahl werden einer zweiten Massenberechnung 210 zugeleitet.

Ein Ansteuerbeginn FB_Post2 einer zweiten Nacheinspritzung ist mit 2B bezeichnet und wird zusammen mit der Ansteuerdauer ti_Post2 und der Drehzahl N einer dritten Massenberechnung 220 zugeleitet.

In der ersten, zweiten und/oder dritten Massenberechnung ist die entsprechende Kraftstoffmasse der entsprechenden Teileinspritzung abhängig von der Drehzahl, der Ansteuerdauer und dem jeweiligen Ansteuerbeginn abgelegt. Bei einer einfachen Ausgestaltung ist hierzu ein dreidimensionaler Kennraum vorgesehen. Ein solcher dreidimensionaler Kennraum kann beispielsweise durch mehrere zweidimensionale Kennfelder und/oder Kennlinien realisiert sein. Des Weiteren ist es möglich, bei einer Ausführungsform vorzusehen, dass anstelle eines Kennraums eine Berechnung mittels geeigneter Funktionen ausgehend von den beschriebenen Eingangsgrößen erfolgt. Dabei kann der Kennraum vorzugsweise durch ein Polynom n_ten Grades angenähert werden.

Das Ausgangssignal der zweiten Massenbestimmung 210 gelangt zum Einen zu einer ersten Massenkorrektur 215 und zu einem Verknüpfungspunkt 217. Entsprechend gelangt das Ausgangssignal der dritten Massenbestimmung zu einer zweiten Massenkorrektur 225 und zu einem zweiten Verknüpfungspunkt 227. In der ersten und zweiten Massenkorrektur 215 bzw. 225 ist jeweils ein Korrekturfaktor abgelegt, mit dem die Ausgangsgröße der zweiten Massenberechnung bzw. der dritten Massenberechnung derart korrigiert wird, dass das am Verknüpfungspunkt 217 bzw. am Verknüpfungspunkt 227 anstehende Massensignal der Kraftstoffmasse entspricht, die einen Beitrag zum Drehmoment liefert. Dies ist erforderlich, da die Kraftstoffmengen bei der Voreinspritzung und bei der Nacheinspritzung einen kleineren Wirkungsgrad besitzen als bei die Haupteinspritzung. Das bedeutet, um das gleiche Drehmoment aufzubringen, müssen bei der Vor- oder Nacheinspritzung gegenüber der Haupteinspritzung größere Kraftstoffmengen eingespritzt werden, um den gleichen Effekt zu erzielen. Dieser Effekt wird durch die Massenkorrekturen 215 und 225 berücksichtigt.

Des Weiteren kann vorgesehen sein, dass zur Abgasnachbehandlung zusätzlich Kraftstoff eingespritzt wird, der zur Konditionierung eines Abgasnachbehandlungssystems, wie beispielsweise eines Partikelfilters und/oder eines Oxidationskatalysators dient. Diese Kraftstoffmasse wird von der Abgaskorrektur 235 ermittelt.

In den Verknüpfungspunkten 218, 228 und 238 werden die einzelnen Ausgangssignale der ersten Massenbestimmung 200 des Verknüpfungspunktes 217, des Verknüpfungspunktes 227 und gegebenenfalls der Abgaskorrektur 225 aufsummiert. D. h. im Ausgang des Verknüpfungspunktes 238 steht eine sogenannte virtuelle Kraftstoffmasse an, die der Kraftstoffinasse entspricht, die bei der Haupteinspritzung zugemessen sein müsste, um ein bestimmtes Drehmoment bereitzustellen.

Im Verknüpfungspunkt 248 wird das Ausgangssignal des Verknüpfungspunktes 238 mit dem Ausgangssignal TK einer Temperaturkorrektur 240 verknüpft. Der Temperaturkorrektur 240 wird ein Signal eines Temperatursensors 242 zugeführt. Neben diesem Signal können auch weitere Signale, wie beispielsweise das Drehzahlsignal N berücksichtigt werden. Ausgehend von der Temperatur wird ein Faktor bestimmt, der den Einfluss der Kraftstofftemperatur auf die Kraftstoffmasse berücksichtigt.

Alternativ zu der beschriebenen Vorgehensweise können auch die einzelnen Ausgangssignale der Massenberechnung entsprechend korrigiert werden. Dabei ist es möglich, dass unterschiedliche Korrekturfaktoren für die unterschiedlichen Teileinspritzungen verwendet werden.

Das so temperaturkorrigierte virtuelle Kraftstoffmassensignal wird dann entsprechend, wie in Figur 1, dem Momentenkennfeld 21 zugeleitet. Vorteilhaft ist diese Vorgehensweise, da mit entsprechenden Systemen, bei denen der Druckaufbau nicht von der Kraftstoffzumessung entkoppelt wird, die eingespritzte Kraftstoffmenge wesentlich vom Ansteuerbeginnwinkel abhängt. Diese Abhängigkeit ist bei Common-Rail-Systemen nicht gegeben. Dort ist lediglich das Moment, das von einer bestimmten Kraftstoffmenge erzeugt wird, vom Ansteuerbeginn abhängig. Die Abhängigkeit der Kraftstoffmasse vom Ansteuerbeginn bei nicht entkoppeltem System ist dabei deutlich größer.

Bei der in Figur 1 beschriebenen Vorgehensweise geht die Kraftstofftemperatur bei der Berechnung der Kraftstoffmasse, ausgehend von dem Volumen, in die Kraftstoffmasse ein. Dies wird in der Regel bei der Kraftstoffdichte berücksichtigt. Bei Pumpe-Düse-Systemen bzw. bei nicht entkoppelten Systemen hat die Kraftstofftemperatur einen erheblich größeren Einfluss und wird deshalb mittels eines separaten Korrekturfaktors berücksichtigt.

Besonders vorteilhaft bei dieser Vorgehensweise ist es, dass die verwendeten Kennfelder häufig auch zur Steuerung der Kraftstoffeinspritzung verwendet werden.

## Patentansprüche

1. Verfahren zum Überwachen einer Brennkraftmaschine, bei der Kraftstoff in wenigstens zwei Teileinspritzungen mittels wenigstens eines Stellelements direkt in wenigstens einen Brennraum eingespritzt wird, bei dem wenigstens auf Grundlage einer eingespritzten und/oder einer einzuspritzenden Kraftstoffmasse ein Istdrehmoment der Brennkraftmaschine bestimmt wird, wobei dieses Istdrehmoment mit einem zulässigen Drehmoment der Brennkraftmaschine verglichen wird und eine Fehlerreaktion eingeleitet wird, wenn das Istdrehmoment in einem vorgegebenen Verhältnis zum zulässigen Drehmoment steht, **dadurch gekennzeichnet, dass** jeweils ein momentenwirksames Kraftstoffvolumen einer Teileinspritzung bestimmt wird, dass ein Gesamtkraftstoffvolumen eines Verbrennungszykluses aus der Summe der momentenwirksame Kraftstoffvolumen der Teileinspritzungen ermittelt wird, und dass unter Berücksichtigung des Gesamtkraftstoffvolumen der Teileinspritzungen die eingespritzte und/oder die einzuspritzende Kraftstoffmasse bestimmt wird, ausgehend von der das Istdrehmoment der Brennkraftmaschine bestimmt wird, und dass eine Wellenkorrekturmasse wenigstens auf Basis von Kraftstoffvolumen der Teileinspritzungen und des auf den Kraftstoff einwirkenden Druckes bestimmt wird, und dass die Kraftstoffmasse mit der Wellenkorrekturmasse zu einer korrigierten Kraftstoffmasse verknüpft wird.

2. Verfahren nach Anspruch 1, **dadurch gekennzeichnet, dass** ein Kraftstoffvolumen einer Teileinspritzung wenigstens auf Basis einer Ansteuerdauer des betreffenden Stellelements und eines auf den Kraftstoff einwirkenden Druckes bestimmt wird.

3. Verfahren nach Anspruch 1, **dadurch gekennzeichnet, dass** ein Kraftstoffvolumen einer Teileinspritzung wenigstens auf Basis einer Ansteuerdauer des betreffenden Stellelements und eines den Ansteuerbeginn charakterisierenden Größe bestimmt wird.

4. Verfahren nach Anspruch 1, **dadurch gekennzeichnet, dass** aus dem Gesamtkraftstoffvolumen mittels einer Kraftstoffdichte (rho) eine Kraftstoffmasse bestimmt wird.

5. Verfahren nach Anspruch 1, **dadurch gekennzeichnet, dass** wenigstens auf Basis der korrigierten Kraftstoffmasse und einer Drehzahl (n) der Brennkraftmaschine ein Drehmoment der Brennkraftmaschine bestimmt wird (21).

6. Verfahren nach Anspruch 1, **dadurch gekennzeichnet, dass** das bestimmte Drehmoment der Brennkraftmaschine mit einem Wirkungsgradkorrekturfaktor zu einem korrigierten Drehmoment der Brennkraftmaschine verknüpft wird.

7. Verfahren nach Anspruch 1, **dadurch gekennzeichnet, dass** die Fehlerreaktion eingeleitet wird, wenn das Istdrehmoment größer als das zulässige Drehmoment ist.

8. Verfahren nach Anspruch 2, **dadurch gekennzeichnet, dass** das bestimmte Kraftstoffvolumen in Abhängigkeit von einem Ansteuerbeginn des entsprechenden Stellelements korrigiert wird.

9. Verfahren nach Anspruch 7, **dadurch gekennzeichnet, dass** zur Korrektur ein Korrekturfaktor aus einem vom Ansteuerbeginn abhängigen Einspritzeffizienzkennfeld entnommen wird.

10. Verwendung des Verfahrens nach einem oder mehreren der vorhergehenden Ansprüche zur Überwachung einer direkteinspritzenden Dieselbrennkraftmaschine.

11. Vorrichtung zur Durchführung des Verfahrens nach einem oder mehreren der Ansprüche 1 bis 10.

## Claims

1. Method for monitoring an internal combustion engine in which fuel is injected in at least two partial injections by means of at least one actuating element directly into at least one combustion chamber, in which method an actual torque of the internal combustion engine is determined at least on the basis of an injected fuel mass and/or a fuel mass to be injected, said actual torque being compared with an admissible torque of the internal combustion engine, and a fault reaction being initiated if the actual torque is in a predefined ratio to the admissible torque, **characterized in that** in each case one fuel volume, which is active with regard to torque, of a partial injection is determined, **in that** a total fuel volume of a combustion cycle is determined from the sum of the fuel volumes, which are active with regard to torque, of the partial injections, and **in that**, taking into consideration the total fuel volume of the partial injections, the injected fuel mass and/or the fuel mass to be injected is determined, on the basis of which the actual torque of the internal combustion engine is determined, and **in that** a wave correction mass is determined at least on the basis of fuel volumes of the partial injections and the pressure acting on the fuel, and **in that** the fuel mass is linked to the wave correction mass to form a corrected fuel mass.

2. Method according to Claim 1, **characterized in that** a fuel volume of a partial injection is determined at least on the basis of an actuation duration of the relevant actuating element and on the basis of a pressure acting on the fuel.

3. Method according to Claim 1, **characterized in that** a fuel volume of a partial injection is determined at least on the basis of an actuation duration of the relevant actuating element and on the basis of a variable which characterizes the start of actuation.

4. Method according to Claim 1, **characterized in that** fuel mass is determined from the total fuel volume by means of a fuel density (rho).

5. Method according to Claim 1, **characterized in that** a torque of the internal combustion engine is determined (21) at least on the basis of the corrected fuel mass and on the basis of a rotational speed (n) of the internal combustion engine.

6. Method according to Claim 1, **characterized in that** the determined torque of the internal combustion engine is linked to an efficiency correction factor to form a corrected torque of the internal combustion engine.

7. Method according to claim 1, **characterized in that** the fault reaction is initiated if the actual torque is greater than the admissible torque.

8. Method according to Claim 2, **characterized in that** the determined fuel volume is corrected as a function of a start of actuation of the corresponding actuating element.

9. Method according to Claim 7, **characterized in that**, for the correction, a correction factor is extracted from an injection efficiency characteristic map which is dependent on the start of actuation.

10. Use of the method according to one or more of the preceding claims for monitoring a direct-injection diesel internal combustion engine.

11. Device for carrying out the method according to one or more of Claims 1 to 10.

## Revendications

1. Procédé de surveillance d'un moteur à combustion interne, dans lequel du carburant est injecté dans au moins deux injections partielles au moyen d'au moins un actionneur directement dans au moins une chambre de combustion, dans laquelle, au moins sur la base d'une masse de carburant injectée et/ou à injecter, un couple instantané du moteur à combustion interne est déterminé, ce couple instantané étant comparé à un couple admissible du moteur à combustion interne et une réaction d'erreur étant amorcée si le couple instantané se trouve dans un rapport prédéfini par rapport au couple admissible, **caractérisé en ce qu'**un volume de carburant d'une injection partielle agissant sur le couple est à chaque fois déterminé, **en ce qu'**un volume de carburant total d'un cycle de combustion est déterminé à partir de la somme des volumes de carburant des injections partielles agissant sur le couple, et **en ce qu'**en tenant compte du volume de carburant total des injections partielles, la masse de carburant injectée et/ou à injecter est déterminée, à partir de laquelle le couple instantané du moteur à combustion interne est déterminé, et **en ce qu'**une masse de correction d'onde est déterminée au moins sur la base du volume de carburant des injections partielles et de la pression agissant sur le carburant, et **en ce que** la masse de carburant est corrélée à la masse de correction d'onde pour donner une masse de carburant corrigée.

2. Procédé selon la revendication 1, **caractérisé en ce qu'**un volume de carburant d'une injection partielle est déterminé au moins sur la base d'une durée de commande de l'actionneur concerné et d'une pression agissant sur le carburant.

3. Procédé selon la revendication 1, **caractérisé en ce qu'**un volume de carburant d'une injection partielle est déterminé au moins sur la base d'une durée de commande de l'actionneur concerné et d'une grandeur caractérisant le début de la commande.

4. Procédé selon la revendication 1, **caractérisé en ce qu'**une masse de carburant est déterminée à partir du volume de carburant total au moyen d'une densité de carburant (rho).

5. Procédé selon la revendication 1, **caractérisé en ce qu'**au moins sur la base de la masse de carburant corrigée et d'un régime (n) du moteur à combustion interne, on détermine un couple du moteur à combustion interne (21).

6. Procédé selon la revendication 1, **caractérisé en ce que** le couple déterminé du moteur à combustion interne est corrélé à un facteur de correction de rendement pour donner un couple corrigé du moteur à combustion interne.

7. Procédé selon la revendication 1, **caractérisé en ce que** la réaction d'erreur est amorcée si le couple instantané est supérieur au couple admissible.

8. Procédé selon la revendication 2, **caractérisé en ce que** le volume de carburant déterminé est corrigé en fonction d'un début de commande de l'actionneur correspondant.

9. Procédé selon la revendication 7, **caractérisé en ce que** pour la correction, on prélève un facteur de correction à partir d'un champ caractéristique de rendement d'injection dépendant du début de la commande.

10. Utilisation du procédé selon l'une quelconque ou plusieurs des revendications précédentes pour la surveillance d'un moteur à combustion interne diesel à injection directe.

11. Dispositif pour mettre en oeuvre le procédé selon l'une quelconque ou plusieurs des revendications 1 à 10.
